# EUROPÄISCHE PATENTSCHRIFT

(11) **EP 2 799 374 B1**
(45) Veröffentlichungstag und Bekanntmachung des Hinweises auf die Patenterteilung: **09.03.2016**
(21) Anmeldenummer: 14178876.0
(22) Anmeldetag: 19.03.2010
(51) Int. Cl.: B65G 47/71, B65G 47/82, B07C 5/34, B65G 47/46

(54) **Ausleitsystem und Verfahren zum Ausleiten von Getränkebehältern von einer sich bewegenden Transporteinrichtung**
System and method for removing beverage containers from a moving transport device
Système et procédé de sortie de récipients de boisson d'un dispositif de transport se déplaçant

(30) Priorität: 29.04.2009 DE 102009003847
(43) Veröffentlichungstag der Anmeldung: 05.11.2014
(62) Teilanmeldung aus: 10157071.1
(73) Patentinhaber: Krones Aktiengesellschaft, 93073 Neutraubling (DE)
(72) Erfinder: Gut, Thorsten, 93073 Neutraubling (DE)
(74) Vertreter: Benninger, Johannes

(56) Entgegenhaltungen:
- WO-A2-02/26602
- DE-A1- 19 532 306
- DE-A1-102005 021 109
- DE-U1- 29 604 683
- DE-U1-202007 013 933
- GB-A- 2 174 667

## Beschreibung

Die Erfindung betrifft ein Ausleitsystem mit einer Vorrichtung zum Ausleiten von Getränkebehältern von einer sich bewegenden Transporteinrichtung mit den Merkmalen des Oberbegriffs des unabhängigen Anspruchs 1. Die Erfindung betrifft weiterhin ein entsprechendes Verfahren zum Ausleiten von Getränkebehältern von einer bewegenden Transporteinrichtung mit den Merkmalen des Oberbegriffs des unabhängigen Verfahrensanspruchs.

Bei Flaschenabfüllanlagen und Transporteinrichtungen für Flaschen sind Vorkehrungen notwendig, um fehlerhafte und/oder beschädigte Flaschen aus einem kontinuierlichen Förderstrom auszusondern. Es sind bereits verschiedene Systeme zum Ausleiten von fehlerhaften Falschen aus einem kontinuierlichen Flaschenstrom bekannt. Hierzu werden Schiebereinrichtungen, sog. "Pusher", verwendet, welche die fehlerhaften Flaschen in seitlicher Richtung aus dem Flaschenstrom schieben. Diese Pusher werden üblicherweise mit Druckluft betrieben, was den unerwünschten Effekt mit sich bringt, dass bei einem Wechsel der in der Anlage transportierten Flaschen der Arbeitsdruck an die neue Flaschensorte angepasst werden muss; ebenso ist auch die Zustellung zum Band manuell zu korrigieren.

Dieses Prinzip ist bereits schon sehr lange bekannt und als Stand der Technik zu werten, weist aber den Nachteil auf, dass die Modulierbarkeit und Steuerbarkeit dieser pneumatischen Schiebereinrichtungen stark eingeschränkt ist. Eine manuelle Anpassung der Steuerparameter und/oder der Auslösezeitpunkte und/oder der Positionen des Schiebers an veränderte Gegebenheiten wie bspw. unterschiedlichen Flaschengrößen und/oder Füllgraden der transportierten Flaschen ist hierbei unumgänglich.

Die DE 20 2007 013 933 U1 offenbart eine Vorrichtung zum gruppenweisen Verteilen von Behältern, in dem die auf einem sich bewegenden Zwischenförderabschnitt transportierten Behälter mittels eines Schiebers gruppenweise auf mehrere, sich am Ende des Zwischenförderabschnitts anschließende Abführstrecken verteilt werden. Der Schieber ist mittels einer Stellantriebrichtung hin- und herbewegbar, dass die Behälter zumindest parallel und quer zur Zuführrichtung geleitet werden können. Die DE 20 2007 013 933 U1 offenbart ein Ausleitsystem nach dem Oberbegriff des Anspruchs 1 und ein Verfahren zum Ausleiten von Behältern nach dem Oberbegriff des Anspruchs 4.

Die DE 10 2005 021 109 A1 offenbart eine Vorrichtung und ein Verfahren zum Bewegen eines Produktes, wobei ein zu verpackendes Produkt mittels eines Stempels auf eine beispielsweise parallel verlaufende Transportbahn verschoben wird. Die Vorrichtung umfasst eine Steuereinrichtung zur Ansteuerung des Antriebs des Stempels, welcher als ein getriebeloser Linearantrieb ausgeführt ist, und eine Detektionseinrichtung zur Erkennung der Position des zugeführten Produkts.

Ein Ziel der vorliegenden Erfindung besteht darin, ein Ausleitsystem zur Verfügung zu stellen, bei welchem die Steuerparameter für die Ausleiteinrichtung besser und schneller an verschiedene Erfordernisse angepasst werden können.

Dieses Ziel der Erfindung wird mit den Gegenständen der unabhängigen Ansprüche erreicht. Merkmale vorteilhafter Weiterbildungen der Erfindung ergeben sich aus den abhängigen Ansprüchen.

Die Erfindung umfasst ein System zum Ausleiten von Getränkebehältern. Diese Ausleitung kann von einer sich bewegenden Transporteinrichtung mit darauf aufeinander folgenden stehenden Getränkebehältern erfolgen. Zudem dient eine Ausleiteinrichtung zum geschobenen Ausleiten von den ausgewählten Getränkebehältern. Ausgewählte Getränkebehälter sind bspw. Flaschen, Behälter oder dgl., welche einen Fehler oder eine Verschmutzung aufweisen.

Der Vorgang des Ausleitens von ausgewählten Getränkebehältern kann senkrecht oder schräg zu einer Förderrichtung der Transporteinrichtung stattfinden. Die Ausleiteinrichtung erfolgt in Abhängigkeit einer übergeordneten Steuerung, die die ausgewählten Getränkebehälter auf mehrere Bahnen verteilt.

Die Ausleiteinrichtung wird gemäß der vorliegenden Erfindung durch einen als Schieber ausgebildeten positionsgeregelten Linearantrieb gebildet, der die ausgewählten Getränkebehälter seitlich von einer Fördereinrichtung auf mehrere Ausleitbahnen schiebt. Eine mögliche Ausleitbahn kann bspw. ein Transportband sein, welches die Getränkebehälter wieder zu einer Reinigungsmaschine zurückführt. Die Rückführung von Getränkebehältern erfolgt bspw. dann, wenn Verschmutzungen in den Getränkebehältern festgestellt werden. Eine weitere Ausleitbahn kann bspw. als ein Transportband ausgebildet sein, welches die Getränkebehälter in einen unter dem Transportband aufgestellten Container weiterleitet. Dieser Container sammelt bspw. die Getränkebehälter auf, die nicht mehr für eine Weiterbehandlung zu gebrauchen sind. Des Weiteren können die Ausleitbahnen Auswurfschächte umfassen.

Bei dem positionsgeregelten Linearantrieb erfolgen die Kraftübertragung und die Krafterzeugung einheitlich. Daher besitzen sie gegenüber getriebebasierten Konzepten Vorteile im Bereich der Positioniergenauigkeit und Dynamik. Zudem umfasst der positionsgeregelten Linearantrieb einen elektrischen Linearmotor, der eine integrierte Positionskontrolle eingebaut hat und durch ein Leitsystem parametrisiert werden kann. D.h. der Linearantrieb bzw. der elektrische Linearmotor ist mit einer Steuereinrichtung gekoppelt, mit der verschiedene Bewegungsparameter des Antriebs vorgebbar sind.

Die Kraft der Ausleitvorrichtung, mit der die ausgewählten Getränkebehälter von der Transporteinrichtung geschoben werden, liegt in Abhängigkeit des zu erwartenden Widerstandes der ausgewählten Getränkebehälter, bspw. von deren Gewicht. Die Kraft des Ausstoßes kann von Getränkebehälter zu Getränkebehälter unterschiedlich sein und muss dementsprechend angepasst werden. Als Beispiel kann eine Leerflascheninspektion erwähnt werden, bei der verschmutzte oder beschädigte Getränkebehälter von der Transporteinrichtung ausgeleitet werden müssen. Die verschmutzten Objekte sind mit der für ihr Leergewicht notwendigen Energie zu beaufschlagen, währenddessen Getränkebehälter mit Restbeständen, bspw. mit einer verbleibenden Reinigungslauge, ungefähr ein doppelt so hohes Gewicht aufweisen und somit zum Ausleiten mit einer größeren Kraft beaufschlagt werden müssen. Ähnlich ist der Sachverhalt bei befüllten. Bei einer Füllhöhenkontrolle, die einer Füllmaschine nachgeschalten ist, werden ebenso unbefriedigend gefüllte Getränkebehälter ausgeleitet. Auch hier weisen Getränkebehälter, die nur halb befüllt sind, weniger Gewicht auf, als Getränkebehälter, die ihre optimale Füllhöhe annährend erreicht haben.

Grundsätzlich können bei der Einrichtung der Getränkebehälter die optimalen Parameter für eine stehende Ausleitung eingestellt werden. Bspw. können mit der Steuereinrichtung ein Hub, eine Hubgeschwindigkeit und/oder eine Beschleunigung des Antriebs für die Ausscheidung der Getränkebehälter in gewünschter Weise gesteuert werden. Die Parameter hierzu werden zuvor in die Steuereinrichtung eingegeben. Allerdings sind während einer Hubbewegung die Steuerparameter des Antriebs wahlweise variierbar. Des Weiteren kann eine absolute Nullposition des Antriebs zum Band und relativ zu den Objekten eingestellt werden.

Für die Einstellung der Antriebsbeschleunigung können verschiedene Parametersätze in der Steuereinrichtung angelegt werden. Diese Parametersätze sind vom Objektzustand abhängig; bspw. kann als erster Parametersatz eine Füllhöhenkontrolle angelegt werden. Wird bei dieser Füllhöhenkontrolle eine zu niedrige Füllung oder eine zu hohe Füllung eines Getränkebehälters erkannt, dann soll dieser Getränkebehälter über die Ausleiteinrichtung ausgeschieden werden. Ein weiterer Parametersatz könnte darin bestehen, Getränkebehälter ohne oder mit zu geringer Füllung nach Vorgabe des entsprechenden Parametersatzes durch die Ausleiteinrichtung auszuscheiden.

Die benötigten Parameter für die Füllhöhenkontrolle können mit einem Sensor ermittelt werden, der mit der Steuereinrichtung gekoppelt ist und ein Signal an die Ausleiteinrichtung gibt, wenn ein Parametersatz ausgelöst wird. Des Weiteren kann der Sensor zur Erfassung von Gewichts- und/oder Schwerpunktsparametern der Getränkebehälter dienen, der ebenfalls die Werte an die Steuereinrichtung weiterleitet. Der Sensor kann bspw. durch eine Kamera oder eine andere optische Erfassungseinrichtung gebildet werden.

Mit der Kamera als Sensor kann auf einfache Weise die Füllhöhenkontrolle für die Ausscheidung erfolgen. Hierzu wird der Füllzustand der Getränkebehälter ermittelt. Ist der Füllzustand eines Getränkebehälters voll, halbvoll oder leer, wird je nach Parametersatz ausgeschieden. Diese Parametersätze werden sortenspezifisch in der Steuereinrichtung eingestellt.

Der Linearantrieb ist vor einer Inbetriebnahme und/oder während eines laufenden Betriebs initialisierbar; d.h. tritt ein Schleppfehler des Linearmotors auf, kann dieser im laufenden Betrieb in seiner Position verstellt werden. Unter Schleppfehler ist im vorliegenden Zusammenhang ein Fehler zu verstehen, der zwischen Positionssoll- und Positionsistwert aufgrund einer Geschwindigkeit verursacht wird. Damit ist gemeint, dass ein Istwert des Schiebers dem Positionssollwert hinterherläuft. Dieser Schleppfehler ist bspw. anhand einer Abweichung bzw. einer Unregelmäßigkeit einer Positions-Istwertkurve in einem Steuerungsdiagramm, welches die Ist- und Sollwerte anzeigt, erkennbar. Durch Vergrößerung des Geschwindigkeitsverstärkungsfaktors kann der Schleppfehler wieder verkleinert werden.

Die Positionsverstellung des Linearantriebs ist von der Steuereinrichtung in Abhängigkeit von den erfassten Sensorwerten hinsichtlich gewichts- und/oder schwerpunkts- und/oder größenabhängiger Parameter der Getränkebehälter steuerbar. Wird ein neuer Objekttyp in die Transporteinrichtung geladen, so erfolgt eine automatische Anpassung der horizontalen Position des Antriebs zum Getränkebehälter.

Neben der Vorrichtung umfasst die Erfindung gleichermaßen ein Verfahren zum Ausleiten von Getränkebehältern. Die Ausleitung erfolgt in einer sich bewegenden Transporteinrichtung mit darauf aufeinander folgend stehenden Getränkebehältern. Die ausgewählten Getränkebehälter werden mittels einer Ausleiteinrichtung zum Ausleiten senkrecht oder schräg zu einer Förderrichtung der Transporteinrichtung geschoben. Die Ausleitung der ausgewählten Getränkebehälter erfolgt somit über einen positionsgeregelten Linearantrieb, der durch einen positionsgeregelten elektrischen Linearmotor gebildet wird. Dieser Linearantrieb bzw. der elektrische Linearmotor wird von einer Steuereinrichtung zur Vorgabe verschiedener Bewegungsparameter des Antriebs angesteuert.

Der Antrieb wird durch die Steuereinrichtung gesteuert, die einen Hub, eine Hubgeschwindigkeit und/oder eine Beschleunigung steuert. Die Steuerparameter während der Hubbewegung des Antriebs können variiert werden. Bspw. wird der Antrieb in Abhängigkeit von Gewichts- und/oder Schwerpunktsparametern der Getränkebehälter angesteuert, zudem kann der Linearantrieb vor einer Inbetriebnahme und/oder während eines laufenden Betriebs initialisiert werden.

Durch eine Schleppfehlererkennung des Linearantriebs kann dieser im laufenden Betrieb in seiner Position verstellt werden. Die Positionsverstellung wird von der Steuereinrichtung in Abhängigkeit von den erfassten Sensorwerten hinsichtlich gewichts- und/oder schwerpunkts- und/oder größenabhängiger Parameter der Getränkebehälter gesteuert.

Im Verfahren zum Ausscheiden von Getränkebehältern werden diese mittels des als Schieber ausgebildeten positionsgeregelten Linearantriebs seitlich von einer Fördereinrichtung auf mehrere Ausleitbahnen geschoben.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügte Zeichnung Bezug nimmt.

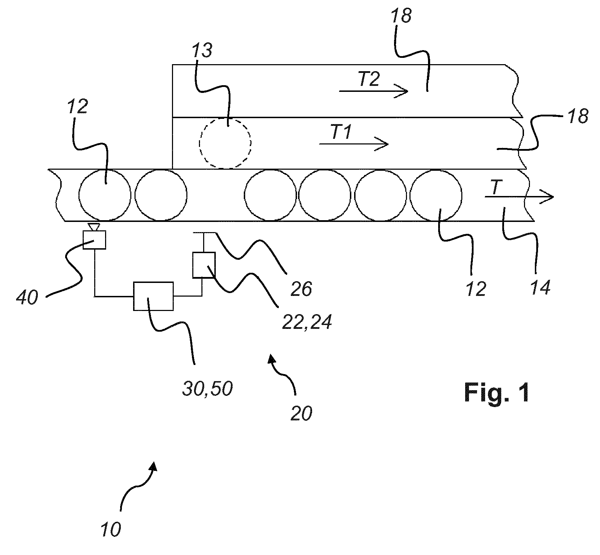

Die einzige Fig. 1 zeigt eine schematische Darstellung einer Vorrichtung zum Ausleiten von Objekten.

Die schematische Darstellung der Fig. 1 zeigt ein Ausführungsbeispiel einer erfindungsgemäßen Vorrichtung 10 zum Ausleiten von Getränkebehältern 12. Diese Getränkebehälter 12 können insbesondere durch Flaschen o. dgl. gebildet sein. Die Vorrichtung 10 setzt sich im vorliegenden Ausführungsbeispiel aus insgesamt drei Transportbändern 14, 18 zusammen. Eine Transporteinrichtung 14 sorgt dafür, dass die Getränkebehälter 12 aufrecht stehend an einem Sensor 40 vorbeibewegt werden. Dieser Sensor 40 erkennt die Sorte der Getränkebehälter 12 und übermittelt die Daten dieser Sorte an eine Steuereinrichtung 30.

Erkennt der Sensor 40 bei einer Füllhöhenkontrolle, dass die Getränkebehälter 12 nur halbvoll statt voll gefüllt sind, so wird ein Signal an die Ausleiteinrichtung 20 übertragen. Diese Signalübertragung erfolgt über die Steuereinrichtung 30, die mit einem Linearantrieb 22 in Wirkverbindung steht. Der Linearantrieb 22 weist einen positionsgeregelten elektrischen Linearmotor 24 auf. Die verschiedenen Bewegungsparameter des Linearantriebs 22 werden zuvor gespeichert, so dass der Linearmotor 24 diejenigen Steuerbefehle ausführen kann, die er von der Steuereinrichtung 30 übermittelt bekommt.

Die fehlerhaften Getränkebehälter 12 werden nach der Übermittlung des Signals von der Steuereinrichtung 30 über einen Schieber 26 ausgeschieden. Der Schieber 26 wird über den positionsgeregelten Linearantriebs 22 angetrieben und kann die fehlerhaften Getränkebehälter 13 über eine oder mehrere nebeneinander angeordneten Ausleitbahnen 18 ausscheiden. Neben der eigentlichen Transporteinrichtung 14, die die Getränkebehälter 12 in Richtung der Weiterbehandlung T transportiert, leiten die daneben angeordneten Ausleitbahnen 18 die fehlerhaften Getränkebehälter 13 entweder zur Entsorgung T1 oder auf ein Transportband zum Rücklauf T2.

Auf das Transportband zum Rücklauf T2 werden fehlerhafte Getränkebehälter 13 ausgeschieden, die bspw. in eine Reinigungsmaschine zurückgeführt werden sollen. Dieses Transportband des Rücklaufs T2 ist in der Figur 1 die zweite Ausleitbahn 18, die neben dem Transportband zur Entsorgung T1 angeordnet, welches wiederum neben der Transporteinrichtung 14 angeordnet ist. Diese parallele Anordnung der Ausleitbahnen 18 ist nur als eines von mehreren möglichen Ausführungsbeispielen zu betrachten. Es ist durchaus denkbar, dass nur eine einzige oder auch mehr als zwei Ausleitbahnen 18 vorhanden sind.

Grundsätzlich ist es sinnvoll, bei der Einrichtung der Getränkebehälter 12 die optimalen Parameter für eine stehende Ausleitung in der Steuereinrichtung 30 einzustellen. So können bspw. für die Beschleunigung verschiedene flaschenzustandsabhängige Parametersätze in der Steuereinrichtung 30 angelegt sein. Diese Parameter werden zudem sortenspezifisch gespeichert. Da unterschiedliche Objekt- oder Flaschengrößen jeweils unterschiedliche Schwerpunktpositionen aufweisen können, benötigen sie für eine störungsfreie Ausleitung entsprechend angepasste Einstellungen des Schiebers 26. Zudem kann es notwendig sein, schwerere Objekte mit anderen Steuerparametern auf die Ausleitbahnen 18 zu befördern als leichtere Objekte. Im Zusammenhang mit der Erkennung des Füllstandes mittels des Sensors 40 können diese Parameter durch weitere gewichtsorientierte und/oder schwerpunktsorientierte Parameter überlagert werden.

Erst die Verwendung eines elektrischen Linearmotors 24 als Schieberantrieb ermöglicht die passgenaue Überführung der fehlerhaften Getränkebehälter 13 auf eines der gewünschten Ausleitbänder 18. Die im Stand der Technik verwendeten pneumatisch angetriebenen Schieber ermöglichen dagegen nur eine relativ grobe Positionierung bei der Ausleitung, da kein positionsgeregelter Antrieb zur Verfügung steht.

### Bezugszeichenliste

- 10: Vorrichtung
- 12: Getränkebehälter
- 13: fehlerhafte Getränkebehälter
- 14: Transporteinrichtung
- 18: Ausleitbahnen
- 20: Ausleiteinrichtung
- 22: Linearantrieb
- 24: Linearmotor
- 26: Schieber
- 30: Steuereinrichtung
- 40: Sensor
- T: Transportband zur Weiterbehandlung
- T1: Transportband zur Entsorgung
- T2: Transportband zum Rücklauf

## Patentansprüche

1. Ausleitsystem, umfassend
- mehrere Ausleitbahnen (18) für Getränkebehälter (12),
- eine Vorrichtung (10) zum Ausleiten von Getränkebehältern (12) von einer sich bewegenden Transporteinrichtung (14) mit darauf aufeinanderfolgend stehenden Getränkebehältern (12), mit einer Ausleiteinrichtung (20) zum geschobenen Ausleiten von ausgewählten Getränkebehältern (12) senkrecht oder schräg zu einer Förderrichtung der Transporteinrichtung (14), wobei die Ausleiteinrichtung (20) durch einen positionsgeregelten Linearantrieb (22) gebildet ist, der Linearantrieb (22) mit einer Steuereinrichtung (30) gekoppelt ist und die Getränkebehälter (12) mittels des als Schieber (26) ausgebildeten positionsgeregelten Linearantriebs (22) seitlich von der Transporteinrichtung (14) auf die mehreren Ausleitbahnen (18) schiebbar sind,
**dadurch gekennzeichnet, dass** das Ausleitsystem
- eine Reinigungsmaschine sowie
- einen Container aufweist, wobei
eine Ausleitbahn (18) als Transportband ausgebildet ist, welches die Getränkebehälter (12) zu der Reinigungsmaschine zurückführt und wobei eine weitere Ausleitbahn (18) als ein weiteres Transportband ausgebildet ist, welches die Getränkebehälter (12) in den Container weiterleitet, welcher Container unterhalb des weiteren Transportbandes aufgestellt ist.

2. Ausleitsystem nach Anspruch 1, bei welchem der positionsgeregelte Linearantrieb (22) einen elektrischen Linearmotor umfasst.

3. Ausleitsystem nach Anspruch 1 oder Anspruch 2, bei welchem der Linearantrieb (22) vor einer Inbetriebnahme und/oder während eines laufenden Betriebes initialisierbar ist.

4. Verfahren zum Ausleiten von Getränkebehältern (12) von einer sich bewegenden Transporteinrichtung (14) mit darauf aufeinanderfolgend stehenden Getränkebehältern (12) mittels einer Ausleiteinrichtung (20) zum geschobenen Ausleiten von ausgewählten Getränkebehältern (12) senkrecht oder schräg zu einer Förderrichtung der Transporteinrichtung (14), wobei Getränkebehälter (12) mit einem positionsgeregelten Linearantrieb (22) ausgeleitet werden und mittels des als Schieber (26) ausgebildeten positionsgeregelten Linearantriebs (22) seitlich von der Transporteinrichtung (14) auf mehrere Ausleitbahnen (18) geschoben werden, **dadurch gekennzeichnet, dass**
- neben der eigentlichen Transporteinrichtung (14), die die Getränkebehälter (12) in Richtung einer Weiterbehandlung transportiert, die daneben angeordneten Ausleitbahnen (18) fehlerhafte Getränkebehälter (13) entweder zur Entsorgung (T1) oder auf ein Transportband zum Rücklauf (T2) leiten und dass
- auf das Transportband zum Rücklauf (T2) fehlerhafte Getränkebehälter (13) ausgeschieden werden, die in eine Reinigungsmaschine zurückgeführt werden.

5. Verfahren nach Anspruch 4, bei dem der Linearantrieb (22) von einer Steuereinrichtung (30) zur Vorgabe verschiedener Bewegungsparameter des Antriebs (22) angesteuert wird, und ein Parametersatz darin besteht, Getränkebehälter (12) ohne oder mit zu geringer Füllung nach Vorgabe des entsprechenden Parametersatzes durch die Ausleiteinrichtung (20) auszuscheiden.

6. Verfahren nach Anspruch 5, bei welchem die Füllhöhenkontrolle mit einem Sensor (40) ermittelt wird, der mit der Steuerungseinrichtung (30) gekoppelt ist.

7. Verfahren nach einem oder mehreren der Ansprüche 4 bis 6, bei dem die Steuereinrichtung (30) einen Hub, eine Hubgeschwindigkeit und/oder eine Beschleunigung des Antriebs (22) steuert.

8. Verfahren nach Anspruch 7, bei dem Steuerparameter während der Hubbewegung des Antriebs (22) variiert werden können.

9. Verfahren nach einem der Ansprüche 4 bis 8, bei dem der Antrieb (22) in Abhängigkeit von Gewichts- und/oder Schwerpunktsparametern der Getränkebehälter (12) angesteuert wird.

10. Verfahren nach einem der Ansprüche 4 bis 9, mit einer Schleppfehlererkennung des Linearantriebs (22).

## Claims

1. A discharge system comprising
- a plurality of discharge tracks (18) for beverage containers (12),
- an apparatus (10) for discharging beverage containers (12) from a moving transport device (14) with beverage containers (12) standing consecutively on it, the apparatus (10) having a discharge device (20) for the pushed discharging of selected beverage containers (12) in perpendicular or obliquely to a conveying direction of the transport device (14), wherein the discharge device (20) is formed by a position-controlled linear drive (22), the linear drive (22) is coupled with a control device (30), and the beverage containers (12) are pushable laterally from the transport device (14) onto the plurality of discharge tracks (18) by means of the position-controlled linear drive (22), which takes the form of a slider (26),
**characterised in that** the discharge system has
- a cleaning machine as well as
- a container, wherein
a discharge track (18) is formed as a transport belt, which returns the beverage containers (12) to the cleaning machine, and wherein a further discharge track (18) is formed as a further transport belt, which forwards the beverage containers (12) into the container, which container is positioned below the further transport belt.

2. The discharge system as recited in claim 1, in which the position-controlled linear drive (22) comprises an electric linear motor.

3. The discharge system as recited in claim 1 or claim 2, in which the linear drive (22) is initialisable prior to a start-up and/or during an ongoing operation.

4. A method for discharging beverage containers (12) from a moving transport device (14) with beverage containers (12) standing consecutively on it by means of a discharge device (20) for the pushed discharging of selected beverage containers (12) in perpendicular or obliquely to a conveying direction of the transport device (14), wherein the beverage containers (12) are discharged by a position-controlled linear drive (22) and are pushed laterally from the transport device (14) onto a plurality of discharge tracks (18) by means of the position-controlled linear drive (22), which takes the form of a slider (26), **characterised in that**,
- next to the actual transport device (14), which transports the beverage containers (12) in a direction toward a further treatment, the discharge tracks (18) arranged alongside the transport device (14) conduct defective beverage containers (13) either to the disposal (T1) or onto a transport belt for the return (T2), and **in that**
- defective beverage containers (13) are discarded onto the transport belt for the return (T2) and are returned into a cleaning machine.

5. The method as recited in claim 4, in which the linear drive (22) is controlled by a control device (30) for specifying different movement parameters of the drive (22), and a parameter set consists in discarding beverage containers (12) without filling or insufficiently filled beverage containers (12) according to the specification of the corresponding parameter set via the discharge device (20).

6. The method as recited in claim 5, in which the fill height inspection is determined by a sensor (40), which is coupled with the control device (30).

7. The method as recited in one or more of the claims 4 to 6, in which the control device (30) controls a stroke, a stroke speed, and/or an acceleration of the drive (22).

8. The method as recited in claim 7, in which control parameters can be varied during the stroke movement of the drive (22).

9. The method as recited in one of the claims 4 to 8, in which the drive (22) is controlled in dependence on weight parameters and/or center of gravity parameters of the beverage containers (12).

10. The method as recited in one of the claims 4 to 9 with a tracking error detection of the linear drive (22).

## Revendications

1. Système d'évacuation comprenant:
- une pluralité de voies d'évacuation (18) pour des récipients de boisson (12),
- un dispositif (10) destiné à évacuer des récipients de boisson (12) d'un dispositif de transport (14) en mouvement, avec des récipients de boisson (12) placés debout successivement sur celui-ci, comprenant un dispositif d'évacuation (20) destiné à faire sortir de manière poussée des récipients de boisson (12) choisis, perpendiculairement à ou obliquement par rapport à une direction de transport du dispositif de transport (14), ledit dispositif d'évacuation (20) étant constitué par un mécanisme d'entraînement linéaire (22) asservi en position, ledit mécanisme d'entraînement linéaire (22) étant couplé à un dispositif de commande (30) et lesdits récipients de boisson (12) pouvant être poussés latéralement depuis le dispositif de transport (14) sur ladite pluralité de voies d'évacuation (18) au moyen du mécanisme d'entraînement linéaire (22) asservi en position qui est réalisé en tant que dispositif de poussée (26),
**caractérisé par le fait que** ledit système d'évacuation présente
- une machine de nettoyage ainsi qu'
- un conteneur,
une voie d'évacuation (18) étant réalisée comme bande transporteuse qui ramène les récipients de boisson (12) à la machine de nettoyage, et une autre voie d'évacuation (18) étant réalisée comme une autre bande transporteuse qui transporte les récipients de boisson (12) dans ledit conteneur, ledit conteneur étant posé au-dessous de ladite autre bande transporteuse.

2. Système d'évacuation selon la revendication 1, dans lequel ledit mécanisme d'entraînement linéaire (22) asservi en position comprend un moteur linéaire électrique.

3. Système d'évacuation selon la revendication 1 ou la revendication 2, dans lequel ledit mécanisme d'entraînement linéaire (22) peut être initialisé avant une mise en service et/ou durant un fonctionnement en cours.

4. Procédé destiné à évacuer des récipients de boisson (12) d'un dispositif de transport (14) en mouvement, avec des récipients de boisson (12) placés debout successivement sur celui-ci, au moyen d'un dispositif d'évacuation (20) destiné à faire sortir de manière poussée des récipients de boisson (12) choisis, perpendiculairement à ou obliquement par rapport à une direction de transport du dispositif de transport (14), des récipients de boisson (12) étant évacués au moyen d'un mécanisme d'entraînement linéaire (22) asservi en position et étant poussés latéralement depuis le dispositif de transport (14) sur plusieurs voies d'évacuation (18) au moyen du mécanisme d'entraînement linéaire (22) asservi en position qui est réalisé en tant que dispositif de poussée (26), **caractérisé par le fait que**,
- outre ledit dispositif de transport (14) proprement dit qui transporte les récipients de boisson (12) vers un traitement ultérieur, les voies d'évacuation (18) disposées à côté transportent des récipients de boisson défectueux (13) soit vers l'élimination (T1) soit sur une bande transporteuse de retour (T2) et que
- sur ladite bande transporteuse de retour (T2) sont évacués des récipients de boisson défectueux (13) qui sont amenés à une machine de nettoyage.

5. Procédé selon la revendication 4, dans lequel ledit mécanisme d'entraînement linéaire (22) est commandé par un dispositif de commande (30) destiné à donner des paramètres de déplacement différents du mécanisme d'entraînement (22), et un jeu de paramètres consiste à éliminer, par ledit dispositif d'évacuation (20), des récipients de boisson (12) non remplis ou remplis de manière insuffisante, selon ce qui est donné par le jeu de paramètres correspondant.

6. Procédé selon la revendication 5, dans lequel le contrôle du niveau de remplissage est détecté au moyen d'un capteur (40) qui est couplé au dispositif de commande (30).

7. Procédé selon l'une ou plusieurs des revendications 4 à 6, dans lequel le dispositif de commande (30) commande une course, une vitesse de course et/ou une accélération du mécanisme d'entraînement (22).

8. Procédé selon la revendication 7, dans lequel on peut faire varier des paramètres de commande durant le mouvement de course du mécanisme d'entraînement (22).

9. Procédé selon l'une quelconque des revendications 4 à 8, dans lequel le mécanisme d'entraînement (22) est commandé en fonction de paramètres de poids et/ou de centre de gravité des récipients de boisson (12).

10. Procédé selon l'une quelconque des revendications 4 à 9, comprenant une détection d'erreur de poursuite du mécanisme d'entraînement linéaire (22).
